# FASCICULE DE BREVET EUROPEEN

(11) **EP 4 410 587 B1**
(45) Date de publication et mention de la délivrance du brevet: **11.03.2026**
(21) Numéro de dépôt: 24155000.3
(22) Date de dépôt: 31.01.2024
(51) Int. Cl.: B60L 5/02, B60L 5/20, B60L 5/24, B60M 1/02

(54) **DISPOSITIF DE PROTECTION ANTI-GIVRE D'UNE BANDE D'USURE D'UN PANTOGRAPHE D'UN VEHICULE FERROVIAIRE**
VORRICHTUNG ZUM SCHUTZ GEGEN VEREISUNG EINES VERSCHLEISSBANDES EINES STROMABNEHMERS EINES SCHIENENFAHRZEUGS
DEVICE FOR PROTECTING A WEAR STRIP OF A PANTOGRAPH OF A RAILWAY VEHICLE AGAINST ICING

(30) Priorité: 02.02.2023 FR 2300970
(43) Date de publication de la demande: 07.08.2024
(73) Titulaire: SNCF Voyageurs, 93200 Saint-Denis (FR)
(72) Inventeur: PEDRON, Adrien, 72000 LE MANS (FR); BOEFFARD, Gwenaël, 37210 ROCHECORBON (FR); CRUCHET, Jérôme, 72150 SAINT-VINCENT-DU-LOROUËR (FR)
(74) Mandataire: Bringer IP

(56) Documents cités:
- EP-A1- 3 527 418
- EP-B1- 2 938 512
- CN-A- 106 183 829
- US-A1- 2014 202 817
- US-A1- 2019 189 369
- US-B2- 9 199 540

## Description

### Domaine technique de l'invention

L'invention se situe dans le domaine ferroviaire, en particulier dans le domaine de la protection des bandes d'usure des pantographes des véhicules ferroviaires.

### Arrière-plan technologique

Un véhicule ferroviaire, tel qu'un train, un métro ou un tramway, comprend en général une motrice électrique alimentée en courant par l'intermédiaire d'une caténaire qui comprend des supports verticaux soutenant un fil de contact qui s'étend au-dessus des rails sur lesquels circule le véhicule ferroviaire.

Un pantographe est en outre installé sur le toit de la motrice électrique du véhicule ferroviaire pour capter le courant électrique circulant dans le fil de contact afin d'alimenter la motrice en énergie électrique au cours de son déplacement sur les rails. Ce pantographe comprend typiquement une partie articulée portée par le toit de la motrice et un archet destiné à recevoir le courant du fil de contact de la caténaire. La partie de l'archet en contact avec le fil de contact de la caténaire est connue sous la terminologie de « bande d'usure » ou « bande de frottement » du pantographe. Cette bande, qui est en général réalisée en carbone ou en carbone métallisé, est montée sur l'archet par l'intermédiaire d'un étrier qui forme un support rigide de la bande d'usure. Cet étrier support de la bande d'usure est en général fait en aluminium ou en acier.

Il est connu que le givrage de la caténaire empêche un bon captage de courant par le pantographe. En effet, le courant électrique ne parvient plus à passer par la surface de contact de la bande d'usure lorsque la caténaire est givrée. Dès lors, le courant passe dans l'air en l'ionisant via l'étrier support de la bande d'usure. Cela se traduit par des arcs électriques qui provoquent des élévations de température dans l'étrier en aluminium ou en acier et dans la bande d'usure, ce qui génère rapidement une détérioration de ces deux équipements (étrier et bande d'usure).

Afin de lutter contre le givre et pour se prémunir contre la détérioration des équipements, il a déjà été proposé d'équiper l'étrier support de la bande d'usure d'aimants destinés à dévier les arcs électriques vers la bande d'usure. Cette solution permet de retarder la destruction de la bande d'usure, mais elle finit toujours, en pratique, par être fortement dégradée. EP3527418A divulgue dispositif de protection anti-givre d'une bande d'usure d'un pantographe d'une motrice d'un véhicule ferroviaire comprenant un étrier support de ladite bande d'usure s'étendant, une fois montée sur ledit étrier support, le long d'une direction, dite direction longitudinale , ledit étrier support comprenant une surface supérieure de portage de ladite bande d'usure et deux surfaces latérales, ledit dispositif de protection comprenant en outre· des moyens de montage amovible dudit dispositif sur ledit étrier support,· au moins un flanc en matériau conducteur s'étendant le long d'une portion d'une surface latérale dudit étrier support et recouvrant cette portion de surface latérale, une fois le dispositif de protection monté sur ledit étrier ,· une pluralité des aimants connectés audit en saillie dudit flanc destinés à capter le courant du fil de contact de la caténaire par des arcs électriques en condition de givre.

Il est aussi connu du document CN106183829 de faire circuler un train racleur équipé d'un pantographe renforcé pour supprimer le givre de la caténaire.

Ce document décrit une lame brise-glace configurée pour être enchâssée dans la bande d'usure et dans l'étrier au moyen de blocs et d'encoches disposées sur la bande d'usure. Les blocs décrits dans ce document s'étendent perpendiculairement au plan défini par la surface supérieure de l'étrier.

Cette solution est toutefois très contraignante et nécessite une logistique complexe et couteuse.

Aucune des solutions connues n'étant totalement satisfaisante, les inventeurs ont cherché à proposer une nouvelle solution permettant de limiter l'usure des pièces équipant le pantographe d'un véhicule ferroviaire lors du givre de la caténaire.

### Objectifs de l'invention

L'invention vise à fournir un dispositif de protection antigivre d'une bande d'usure d'un pantographe.

L'invention vise aussi à fournir, dans au moins un mode de réalisation, un tel dispositif de protection qui peut être monté de manière amovible sur un pantographe d'une motrice d'un véhicule ferroviaire.

L'invention vise aussi à fournir, dans au moins un mode de réalisation, un tel dispositif qui peut être monté sur un pantographe non seulement pendant des épisodes de givre, mais aussi pendant le reste de l'année, quelles que soient les conditions climatiques, sans entraver le bon fonctionnement du pantographe.

L'invention vise aussi à fournir, dans au moins un mode de réalisation, un tel dispositif qui soit résistant et puisse être utilisé pendant de nombreuses années.

L'invention vise aussi à fournir, dans au moins un mode de réalisation, un tel dispositif qui peut être monté sur un pantographe équipant une motrice d'un véhicule ferroviaire sans modification du pantographe.

L'invention vise aussi à fournir une motrice d'un véhicule ferroviaire équipée d'un dispositif de protection antigivre selon l'invention.

### Exposé de l'invention

Pour ce faire, l'invention concerne un dispositif de protection antigivre d'une bande d'usure d'un pantographe d'une motrice d'un véhicule ferroviaire comprenant un étrier support de ladite bande d'usure s'étendant, une fois montée sur ledit étrier support, le long d'une direction, dite direction longitudinale, ledit étrier comprenant une surface supérieure de portage de ladite bande d'usure et deux surfaces latérales. L'invention est définie dans les revendications qui suivent la description.

Le dispositif de protection selon l'invention comprend :
- des moyens de montage amovible dudit dispositif sur ledit étrier support,
- au moins un flanc en matériau conducteur s'étendant le long d'une portion d'une surface latérale dudit étrier support et recouvrant cette portion de surface latérale, une fois le dispositif de protection monté sur ledit étrier,
- une pluralité de picots en saillie dudit flanc destinés à capter le courant du fil de contact de la caténaire par des arcs électriques en condition de givre, chaque picot s'étendant perpendiculairement à ladite direction longitudinale.

Le dispositif de protection selon l'invention forme ainsi un blindage de protection d'une bande d'usure d'un pantographe et de l'étrier support de cette bande d'usure en captant les éventuels arcs électriques générés par le contact entre la bande d'usure et un câble de contact de caténaire givré.

Ce dispositif de protection (aussi désigné par la terminologie de « blindage » dans le texte) est fixé sur l'étrier support de la bande d'usure du pantographe par des moyens de montage amovible. Ainsi, il est possible de remplacer la bande d'usure du pantographe, tout en réutilisant le même blindage de protection. Un dispositif selon l'invention peut donc être utilisé sur une motrice de véhicule ferroviaire pendant plusieurs saisons, tout en permettant le remplacement de la bande d'usure lorsque nécessaire.

Le dispositif de protection comprend au moins un flanc qui recouvre une portion latérale dudit étrier support. Le dispositif de protection permet ainsi d'éviter que les arcs électriques générés en cas de givre de la bande de contact de la caténaire ne détériorent la portion de l'étrier support couverte par le flanc du dispositif de protection.

Un dispositif de protection selon l'invention est particulièrement utile pour équiper des motrices alimentées par un courant continu.

Le dispositif selon l'invention peut équiper un pantographe et être laissé sur le pantographe, quelles que soient les conditions météorologiques. En cas de givre, le dispositif capte le courant par les arcs électriques générés, tout en protégeant la bande d'usure et l'étrier. En l'absence de givre, le courant passe normalement par la surface supérieure de la bande d'usure.

La pluralité de picots portés par le flanc du dispositif permet d'attirer les arcs électriques générés par le contact du pantographe avec le fil de contact de caténaire givré et limite les risques que les arcs atteignent l'étrier et/ou la surface supérieure de la bande d'usure.

Selon l'invention, l'étrier et la bande d'usure s'étendent selon la même direction longitudinale, et l'étrier comprend une surface supérieure, dite surface de portage de la bande d'usure, ainsi que deux surfaces latérales. Il est ainsi entendu que les deux surfaces latérales de l'étrier sont dans des plans respectifs sensiblement perpendiculaires au plan comprenant la surface supérieure de l'étrier.

Il est entendu au sens de l'invention que les picots s'étendent perpendiculairement au plan d'au moins un flanc latéral ou d'une surface latérale de l'étrier. En d'autres termes, chaque picot s'étend en saillie du flanc latéral, de manière perpendiculaire au plan défini par une surface latérale de l'étrier.

Selon l'invention, lesdits moyens de montage amovible comprennent deux platines de montage reliées solidairement à chaque flanc dudit dispositif de protection, chaque platine comprenant un alésage conformé à une vis de fixation d'un shunt de liaison électrique s'étendant sous ledit étrier support de manière à pouvoir fixer ledit dispositif de protection par les vis de fixation des shunts de liaison électrique de ladite motrice.

Selon l'invention, le dispositif de protection est fixé sous l'étrier support de la bande d'usure de telle sorte que chaque flanc du dispositif de protection couvre l'étrier depuis le point de fixation sous ce dernier jusqu' à la bande d'usure. En outre, le dispositif de fixation est fixé au niveau des vis de fixation des shunts de liaison électrique. En d'autres termes, le dispositif de protection se fixe sur des vis déjà présentes sur le pantographe, ce qui facilite son intégration sur les pantographes existants, sans modification de ce dernier. Enfin, le dispositif de protection étant fixé sur les vis de fixation des shunts de liaison électrique, le courant capté par le dispositif de protection alimente directement les shunts de liaison électrique, sans passer par la bande d'usure.

Avantageusement, le dispositif selon l'invention comprend deux flancs s'étendant chacun le long d'une portion de chaque surface latérale dudit étrier support et recouvrant cette portion latérale, une fois le dispositif de protection monté sur ledit étrier.

Selon cette variante avantageuse, les deux faces latérales de l'étrier sont protégées par le dispositif de protection selon l'invention.

Si un seul flanc latéral est prévu sur le dispositif selon l'invention, il est particulièrement avantageux de monter le dispositif de telle sorte qu'il soit agencé sur la face de l'étrier située coté extérieur du pantographe car c'est sur la face extérieure que se concentrent les dégradations de l'étrier liées aux arcs électriques. Un seul flanc latéral peut en outre présenter un gain de poids et limite la matière utilisée pour concevoir le dispositif de protection selon l'invention.

Avantageusement et selon l'invention, chaque flanc est équipé de dix picots régulièrement répartis le long du flanc.

Selon cette variante, chaque picot est destiné à attirer les arcs électriques générés par le contact du pantographe avec le fil de contact de caténaire givré. La répartition uniforme des picots le long de chaque flanc permet d'optimiser le captage des arcs électriques par les picots. Bien entendu, rien n'empêche d'utiliser un nombre différent de picots, ce nombre pouvant par exemple dépendre de la longueur de la bande d'usure et/ou de la longueur de l'étrier support de la bande d'usure.

Avantageusement et selon l'invention, chaque flanc et chaque picot est fait en métal réfractaire.

Selon cette variante avantageuse, le matériau conducteur utilisé pour former chaque flanc et les picots est un métal réfractaire, c'est-à-dire un métal résistant à la chaleur et à l'usure. L'une des caractéristiques d'un métal réfractaire est son point de fusion qui est supérieur à 2 000°C. Ainsi, le dispositif selon cette variante avantageuse est très résistant à la chaleur et à l'usure et peut être utilisé de nombreuses années sur un pantographe.

Avantageusement et selon l'invention, le métal réfractaire formant chaque flanc et chaque picot est choisi dans la liste comprenant le molybdène, le tungstène, le niobium, le tantale ou tout alliage de deux ou plus de ces matériaux.

Selon cette variante avantageuse, le métal réfractaire utilisé présente un point de fusion supérieur à 2 200 °C et une densité supérieure à 8g.cm-3.

L'invention concerne aussi une motrice d'un véhicule ferroviaire destiné à circuler sur une voie de circulation équipée d'un fil de contact d'une caténaire, ladite motrice comprenant un pantographe muni d'un étrier support d'une bande d'usure destinée à capter le courant du fil de contact de la caténaire, caractérisée en ce que ledit pantographe est équipé d'un dispositif de protection de ladite bande d'usure dudit pantographe selon l'invention.

Les avantages et effets techniques du dispositif de protection selon l'invention s'appliquent *mutatis mutandis* à une motrice d'un véhicule ferroviaire selon l'invention.

L'invention concerne également un dispositif de protection et une motrice d'un véhicule ferroviaire caractérisés en combinaison par tout ou partie des caractéristiques mentionnées ci-dessus ou ci-après.

### Liste des figures

D'autres buts, caractéristiques et avantages de l'invention apparaîtront à la lecture de la description suivante donnée à titre uniquement non limitatif et qui se réfère aux figures annexées dans lesquelles :
- la figure 1 est une vue schématique en perspective d'un dispositif de protection antigivre d'une bande d'usure d'un pantographe selon un mode de réalisation de l'invention,
- la figure 2 est une vue schématique de côté d'un pantographe et du dispositif de protection de la figure 1 destiné à être fixé sur l'étrier du pantographe,
- la figure 3 est une vue schématique en perspective d'un pantographe et du dispositif de protection de la figure 1 monté sur le pantographe,
- la figure 4 est une vue schématique d'une motrice d'un véhicule ferroviaire comprenant un pantographe équipé du dispositif de la figure 1.

### Description détaillée d'un mode de réalisation de l'invention

Sur les figures, les échelles et les proportions ne sont pas strictement respectées et ce, à des fins d'illustration et de clarté.

Les éléments identiques, similaires ou analogues sont désignés par les mêmes références dans toutes les figures.

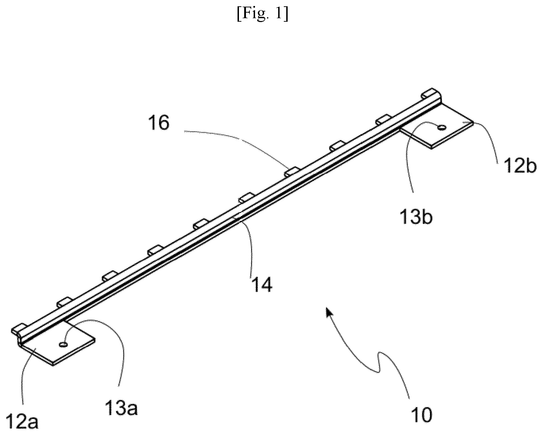

La figure 1 illustre un dispositif de protection anti-givre 10 d'une bande d'usure d'un pantographe selon un mode de réalisation de l'invention, destiné à équiper le pantographe d'une motrice d'un véhicule ferroviaire.

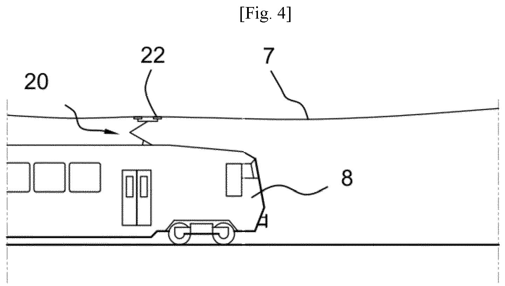

La figure 4 illustre schématiquement une motrice 8 d'un véhicule ferroviaire équipé du dispositif de protection anti-givre selon un mode de réalisation de l'invention.

Cette motrice 8 comprend un pantographe 20 installé sur le toit de la motrice 8 destiné à capter le courant électrique circulant dans un fil de contact 7 d'une caténaire. Le pantographe 20 comprend une partie articulée portée par le toit de la motrice et un archet destiné à recevoir le courant du fil de contact 7 de la caténaire. La partie de l'archet en contact avec le fil de contact 7 de la caténaire est communément désigné par la terminologie de bande d'usure 22. La bande d'usure 22 est par exemple réalisée en carbone ou en carbone métallisé et est montée sur l'archet par l'intermédiaire d'un étrier 24 qui forme un support rigide de la bande d'usure 22. Cet étrier support 24 de la bande d'usure est fait en aluminium ou en acier.

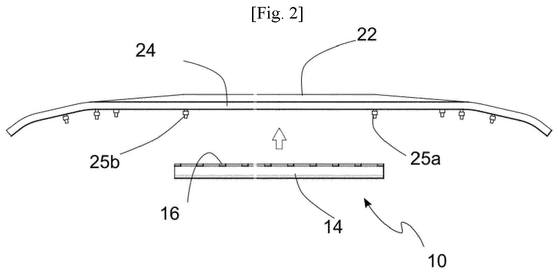

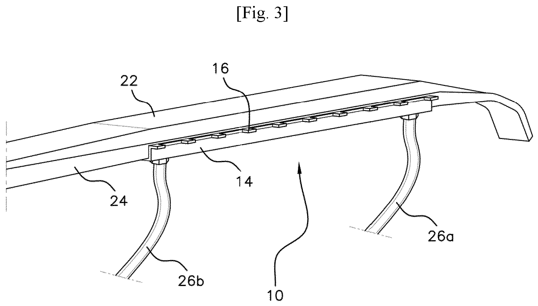

Les figures 2 et 3 illustrent schématiquement l'étrier support 24 du pantographe, la bande d'usure 22 porté par l'étrier 24 et le dispositif de protection anti-givre 10.

L'étrier 24 comprend une surface supérieure de portage de la bande d'usure 22 et deux surfaces latérales.

Tel qu'illustré par la figure 1, le dispositif de protection anti-givre 10 comprend deux platines de fixation 12a, 12b pourvues chacune d'un alésage 13a, 13b conformé chacun à une vis de fixation 25a, 25b porté par l'étrier 24.

Les platines de fixation forment des moyens de montage amovible du dispositif de protection anti-givre 10 sur le pantographe 22. Un dispositif de protection anti-givre selon l'invention peut donc ainsi être aisément monté sur un pantographe et démonté lorsque nécessaire.

En outre, les vis de fixation 25a, 25b sont avantageusement les vis destinées à assurer la liaison électrique avec des shunts alimentant la motrice 8. Ainsi et tel qu'illustré sur la figure 3, le courant électrique capté par le dispositif de protection anti-givre peut directement alimenter les câbles 26a, 26b de liaison électrique avec des shunts alimentant la motrice.

Un dispositif de protection selon l'invention peut donc être aisément monté sur un pantographe existant en utilisant les vis de fixation préexistante sur le pantographe. Ainsi, aucune modification du pantographe n'est nécessaire pour l'équiper avec un dispositif de protection anti-givre selon l'invention.

Il est donc particulièrement aisé avec un dispositif de protection anti-givre selon l'invention de mettre à niveau un pantographe d'une motrice et lui conférer une fonctionnalité anti-givre.

Le dispositif de protection anti-givre 10 comprend en outre un flanc latéral 14, qui s'étend entre les deux platines de fixation 12a, 12b. Ce flanc latéral 14 vient recouvrir une portion de la surface latérale de l'étrier 24, une fois monté sur l'étrier du pantographe, tel que représenté sur la figure 3. Le flanc latéral 14 s'étend de préférence sur toute la hauteur de l'étrier 24 jusqu' à la surface supérieure de portage de la bande d'usure 22, sans dépasser cette dernière. Ainsi, en cas d'usure de la bande d'usure 22, il n'y pas de risque que le fil de contact vienne en contact avec le flanc latéral 14 et les picots 16.

Selon une autre variante non représentée sur les figures, le dispositif peut comprendre deux flancs latéraux de manière à pouvoir recouvrir, une fois fixé à l'étrier du pantographe, les deux faces latérales de l'étrier.

Le dispositif de protection 10 comprend en outre une pluralité de picots 16 - par exemple dix picots - répartis régulièrement le long du flanc. Chaque picot 16 s'étend en saillie du flanc 14, selon une direction perpendiculaire à la direction principale du flanc latéral 14, dite direction longitudinale.

En d'autres termes, les picots 16 s'étendent parallèlement à la direction du fil de contact 7 de la caténaire destiné à alimenter la motrice 8 sur laquelle le dispositif de protection est monté.

De préférence, le dispositif de protection anti-givre 10 est fabriqué en un métal réfractaire choisi dans le groupe comprenant le molybdène, le tungstène, le niobium, le tantale ou tout alliage de deux ou plus de ces matériaux.

D'autres matériaux peuvent néanmoins être utilisés sous réserve que ces matériaux soient conducteurs et présentent une bonne résistance à la chaleur (point de fusion supérieur à 1 000 °C, et de préférence supérieure à 1 800°C).

## Revendications

1. Dispositif de protection anti-givre (10) d'une bande d'usure (22) d'un pantographe (20) d'une motrice (8) d'un véhicule ferroviaire comprenant un étrier (24) support de ladite bande d'usure (22 s'étendant, une fois montée sur ledit étrier (24) support, le long d'une direction, dite direction longitudinale, ledit étrier support comprenant une surface supérieure de portage de ladite bande d'usure et deux surfaces latérales, ledit dispositif de protection comprenant :
- des moyens de montage amovible dudit dispositif sur ledit étrier support (24),
- au moins un flanc (14) en matériau conducteur s'étendant le long d'une portion d'une surface latérale dudit étrier support et recouvrant cette portion de surface latérale, une fois le dispositif de protection monté sur ledit étrier, ledit dispositif étant **caractérisé en ce qu'**il comprend:
- une pluralité de picots (16) en saillie dudit flanc (14) destinés à capter le courant du fil de contact (7) de la caténaire par des arcs électriques en condition de givre, chaque picot (16) s'étendant perpendiculairement à ladite direction longitudinale,
- et où lesdits moyens de montage amovible comprennent deux platines (12a, 12b) de montage reliées solidairement à chaque flanc (14) dudit dispositif de protection, chaque platine (12a, 12b) comprenant un alésage (13a, 13b) conformé à une vis de fixation (25a, 25b) d'un shunt de liaison électrique (26a, 26b) s'étendant sous ledit étrier (24) support de manière à pouvoir fixer ledit dispositif de protection (10) par les vis de fixation des shunts de liaison électrique de ladite motrice.

2. Dispositif selon la revendication 1, **caractérisé en ce qu'**il comprend deux flancs (14) s'étendant chacun le long d'une portion de chaque surface latérale dudit étrier support et recouvrant cette portion latérale, une fois le dispositif de protection monté sur ledit étrier (24).

3. Dispositif selon l'une des revendications 1 à 2, **caractérisé en ce que** chaque flanc (14) est équipé de dix picots (16) régulièrement réparties le long du flanc.

4. Dispositif selon l'une des revendications 1 à 3, **caractérisé en ce que** chaque flanc (14) et chaque picot (16) est fait en métal réfractaire.

5. Dispositif selon la revendication 4, **caractérisé en ce que** le métal réfractaire formant chaque flanc (14) et chaque picot (16) est choisi dans la liste comprenant le molybdène, le tungstène, le niobium, le tantale ou tout alliage de deux ou plus de ces matériaux.

6. Motrice (8) d'un véhicule ferroviaire destiné à circuler sur une voie de circulation équipée d'un fil de contact (7) d'une caténaire, ladite motrice (8) comprenant un pantographe (20) muni d'un étrier (24) de support d'une bande d'usure (22) destinée à capter le courant du fil de contact (7) de la caténaire, **caractérisée en ce que** ledit pantographe (20) est équipé d'un dispositif de protection anti-givre (10) de ladite bande d'usure (22) dudit pantographe selon l'une des revendications 1 à 5.

## Patentansprüche

1. Vereisungsschutzvorrichtung (10) für eine Schleifleiste (22) eines Stromabnehmers (20) eines Triebwagens eines Schienenfahrzeugs (8), mit einer Halterung (24), die die Schleifleiste (22) trägt, die sich, sobald diese an der Halterung (24) angebracht ist, entlang einer als Längsrichtung bezeichneten Richtung erstreckt, worin die Halterung eine Oberseite zum Tragen der Schleifleiste und zwei Seitenflächen aufweist, worin die Schutzvorrichtung umfasst:
- abnehmbare Befestigungsmittel der Vorrichtung an der Halterung (24),
- mindestens eine Flanke (14) aus leitfähigem Material, die sich entlang eines Abschnitts einer Seitenfläche der Halterung erstreckt und diesen Abschnitt der Seitenfläche abdeckt, sobald die Schutzvorrichtung an der Halterung angebracht ist, worin die Vorrichtung **dadurch gekennzeichnet ist, dass** diese umfasst:
- mehrere Stifte (16), die aus der Flanke (14) herausragen und ausgestaltet sind, den Strom aus dem Fahrdraht (7) der Oberleitung mittels Lichtbögen unter eisigen Bedingungen aufzufangen, worin sich jeder Stift (16) senkrecht zur Längsrichtung erstreckt,
und worin die abnehmbaren Befestigungsmittel zwei Befestigungsplatten (12a, 12b) umfassen, die fest mit jeder Flanke (14) der Schutzvorrichtung verbunden sind, worin jede Platte (12a, 12b) eine Bohrung (13a, 13b) umfasst, die geformt ist, eine Befestigungsschraube (25a, 25b) eines elektrischen Verbindungs-Shunts (26a, 26b) aufzunehmen, der sich unter der Halterung (24) erstreckt und dazu ausgestaltet ist, die Schutzvorrichtung (10) mittels der Befestigungsschrauben des elektrischen Verbindungs-Shunts des Triebwagens zu befestigen.

2. Vorrichtung nach Anspruch 1, **dadurch gekennzeichnet, dass** diese zwei Flanken (14) umfasst, die sich jeweils entlang eines Abschnitts jeder Seitenfläche der Halterung erstrecken und diesen seitlichen Abschnitt abdecken, sobald die Schutzvorrichtung an der Halterung (24) angebracht ist.

3. Vorrichtung nach einem der Ansprüche 1 bis 2, **dadurch gekennzeichnet, dass** jede Flanke (14) mit zehn Stiften (16) ausgestattet ist, die gleichmäßig entlang der Flanke verteilt sind.

4. Vorrichtung nach einem der Ansprüche 1 bis 3, **dadurch gekennzeichnet, dass** jede Flanke (14) und jeder Stift (16) aus einem Refraktärmetall besteht.

5. Vorrichtung nach Anspruch 4, **dadurch gekennzeichnet, dass** das Refraktärmetall, aus dem jede Flanke (14) und jeder Stift (16) besteht, ausgewählt ist aus der Liste bestehend aus Molybdän, Wolfram, Niob, Tantal oder jeder Legierung aus zwei oder mehreren dieser Materialien.

6. Triebwagen (8) für ein Schienenfahrzeug, das auf einer mit einem Fahrdraht (7) einer Oberleitung ausgestatteten Strecke fahren soll, worin der Motor (8) einen Stromabnehmer (20) umfasst, der mit einer Halterung (24) zum Halten einer Schleifleiste (22) ausgestattet ist, die dazu bestimmt ist, Strom vom Fahrdraht (7) der Oberleitung aufzunehmen, **dadurch gekennzeichnet, dass** der Stromabnehmer (20) mit einer Vereisungsschutzvorrichtung (10) für die Schleifleiste (22) des Stromabnehmers gemäß einem der Ansprüche 1 bis 5 ausgestattet ist.

## Claims

1. Anti-icing protection device (10) for a wear strip (22) of a pantograph (20) of a railway vehicle power car (8), comprising a bracket (24) supporting said wear strip (22) extending, once mounted on said support bracket (24), along a direction, known as the longitudinal direction, said support bracket comprising an upper surface for supporting said wear strip and two side surfaces, said protection device comprising :
- removable mounting means of said device on said support bracket (24),
- at least one flank (14) made of conductive material extending along a portion of a side surface of said support bracket and covering this portion of the side surface once the protective device is mounted on said bracket, said device being **characterized in that** it comprises:
- a plurality of pins (16) projecting from said flank (14) configured to collect the current from the contact wire (7) of the catenary by means of electric arcs in icy conditions, each pin (16) extending perpendicularly to said longitudinal direction,
and where said removable mounting means comprise two mounting plates (12a, 12b) fixedly connected to each flank (14) of said protection device, each plate (12a, 12b) comprising a bore (13a, 13b) shaped to accommodate a fixing screw (25a, 25b) of an electrical connection shunt (26a, 26b) extending under said support bracket (24) configured to fix said protective device (10) by means of the fixing screws of the electrical connection shunts of said power car.

2. Device according to claim 1, **characterized in that** it comprises two flanks (14) each extending along a portion of each side surface of said support bracket and covering this lateral portion once the protection device is mounted on said bracket (24).

3. Device according to one of claims 1 to 2, **characterized in that** each flank (14) is equipped with ten pins (16) evenly distributed along the flank.

4. Device according to one of claims 1 to 3, **characterized in that** each flank (14) and each spike (16) is made of refractory metal.

5. Device according to claim 4, **characterized in that** the refractory metal forming each flank (14) and each spike (16) is chosen from the list comprising molybdenum, tungsten, niobium, tantalum or any alloy of two or more of these materials.

6. Power car (8) for a railway vehicle intended to run on a track equipped with a contact wire (7) of an overhead line, said motor (8) comprising a pantograph (20) equipped with a bracket (24) for supporting a wear strip (22) intended to collect current from the contact wire (7) of the catenary, **characterized in that** said pantograph (20) is equipped with an anti-icing protection device (10) for said wear strip (22) of said pantograph according to one of claims 1 to 5.
